# FASCICULE DE BREVET EUROPEEN

(11) **EP 2 817 663 B1**
(45) Date de publication et mention de la délivrance du brevet: **12.08.2020**
(21) Numéro de dépôt: 13705496.1
(22) Date de dépôt: 22.02.2013
(51) Int. Cl.: G01W 1/12, G01W 1/00

(54) **SYSTÈME ET PROCÉDÉ DE CARTOGRAPHIE TRIDIMENSIONNELLE DE LA NÉBULOSITÉ DU CIEL**
SYSTEM UND VERFAHREN ZUR DREIDIMENSIONALEN ABBILDUNG DER BEWÖLKUNG DES HIMMELS
SYSTEM AND METHOD FOR THE THREE-DIMENSIONAL MAPPING OF THE CLOUDINESS OF THE SKY

(30) Priorité: 24.02.2012 FR 1251700
(43) Date de publication de la demande: 31.12.2014
(73) Titulaire: Reuniwatt, 97490 Sainte-Clotilde (FR)
(72) Inventeur: SCHMUTZ, Nicolas, F-97490 Sainte-clotilde (FR)
(74) Mandataire: Ipside
(86) Numéro de dépôt international: PCT/EP2013/053589
(87) Numéro de publication internationale: WO 2013/124432

(56) Documents cités:
- US-A- 6 035 710
- US-A1- 2008 264 164
- US-A1- 2010 198 420
- L. Álvarez ET AL: "3D Atmospheric Cloud Structures: Processing and Visualization", , 18 septembre 2010 (2010-09-18), pages 1-3, XP055046720, Extrait de l'Internet: URL:http://web.archive.org/web/20100918072 518/http://serdis.dis.ulpgc.es/~krissian/H omePage/Demos/Fluid/3DCloudVisualization.h tml [extrait le 2012-12-05]
- SEBAG J ET AL: "LSST IR Camera for Cloud Monitoring and Observation Planning", GROUND-BASED AND AIRBORNE TELESCOPES II - PROC. OF SPIE, vol. 7012, 2008, XP040439716,
- CHI WAI CHOW ET AL: "Intra-hour forecasting with a total sky imager at the UC San Diego solar energy testbed", SOLAR ENERGY, PERGAMON PRESS. OXFORD, GB, vol. 85, no. 11, 19 août 2011 (2011-08-19) , pages 2881-2893, XP028310461, ISSN: 0038-092X, DOI: 10.1016/J.SOLENER.2011.08.025 [extrait le 2011-08-24]

## Description

La présente invention concerne un système et un procédé pour la détermination de la cartographie tridimensionnelle de la nébulosité du ciel. Elle concerne également un ensemble de prévision de la production électrique fournie par une installation de production d'énergie solaire équipée d'un ou plusieurs panneaux solaires comportant un tel système.

L'évaluation de la nébulosité du ciel est traditionnellement réalisée par un observateur humain depuis le sol. Le contour de l'horizon que voit l'observateur sous un certain angle solide délimite la voûte céleste pour laquelle cet observateur va évaluer la nébulosité à l'estime.

A titre purement illustratif, un ciel dit couvert, c'est-à-dire entièrement occulté par les nuages, présente une estimation de nébulosité égale à 8 octas. L'unité de mesure de la nébulosité du ciel qu'est l'octa correspond donc à un huitième de la voûte céleste.

Toutefois, le caractère empirique de cette estimation est aujourd'hui incompatible avec les exigences toujours plus grandes de fiabilité et de précision requises dans certains domaines d'activité.

A titre illustratif, dans le domaine aéronautique, le pilote d'un aéronef doit avoir une connaissance précise des conditions météorologiques, et notamment de la nébulosité du ciel, aux abords d'un aéroport pour se poser ou décoller.

De même, la production d'électricité générée par une centrale photovoltaïque peut être qualifiée d'intermittente, car celle-ci va dépendre fortement des aléas climatiques, en particulier de la nébulosité du ciel.

En effet, l'ombre d'un nuage peut venir recouvrir au moins partiellement les panneaux photovoltaïques de cette centrale entrainant de fait une atténuation de la production électrique.

Afin de tenir la stabilité du réseau électrique, le gestionnaire de réseau doit alors piloter des outils de soutien au réseau afin de compenser une éventuelle chute de la production d'électricité d'origine photovoltaïque.

A titre d'exemple, ces outils de soutien peuvent être de simples batteries délivrant leur énergie sur le réseau électrique en cas de baisse prévisionnelle momentanée de la production électrique ou des turbines à combustion thermique en cas de baisse prévisionnelle longue de la production électrique.

Or, le pilotage de ces outils de soutien n'est aujourd'hui pas optimisé, faute d'outil fiable et précis de prévision de la production d'électricité d'origine photovoltaïque.

Ce manque de données génère des coûts directs (carburant consommé, vieillissement de l'installation) et indirects, tels que la génération de dioxyde de carbone (CO₂) en cas de démarrages intempestifs.

Il n'en demeure pas moins que l'énergie photovoltaïque est une source d'énergie inépuisable et relativement propre. Les centrales photovoltaïques connaissent donc un essor important qui va encore croître dans les prochaines années.

La demande de brevet américain No. US 2010/198420 A1 propose ainsi un procédé de gestion dynamique de la production d'une exploitation solaire dans laquelle différents facteurs météorologiques sont intégrés pour prédire et gérer les capacités de production photovoltaïque. Ces facteurs météorologiques sont obtenus en outre à partir des conditions de nébulosité et du vent mesurés par différentes stations météorologiques et des capteurs à l'intérieur de la production.

En effet, on connaît plusieurs méthodes et instruments permettant de déterminer des conditions de nébulosité du ciel. Par exemple, on connaît de la demande de brevet américain No. US2008/2264164 l'utilisation de capteurs infrarouges pour mesurer à partir du sol les conditions de météorologie. On connaît également le développement des détecteurs infrarouges très sensibles utilisés dans les observatoires astronomiques pour définir les meilleurs jours pour l'observation du ciel en fonction de la nébulosité (J. Sebag et al, LSST IR Camera for cloud monitoring and observation planning, Proc. of SPIE Vol. 7012, 2008).

On connaît également les stations d'observation météorologique satellitaires offrant une perspective tridimensionnelle du ciel à partir de données recueillies des canaux d'image visible, de température, de pression, et de vapeur d'eau tel que décrit par L. Alvarez et al dans « 3D atmospheric cloud structures : Processing and visualization » et dans la demande de brevet américain No. US 6035 710 A.

Il a été aussi proposé de réaliser une prédiction sur une distance sous-kilométrique pour une station photovoltaïque à partir des images panoramiques prises par un capteur du type « sky imager » au sol (CHI WAI CHOW et al. « Intra-hour forecasting with a total sky imager at the UC San Diego solar energy testbed »).

Il existe donc un besoin pressant pour un procédé et un système permettant de déterminer de manière fiable et précise la fraction du ciel comportant des nuages et les classes d'altitude de ces nuages.

L'objectif de la présente invention est donc de proposer un procédé et un système de cartographie tridimensionnelle de la nébulosité dans une région d'observation du ciel donnée, et notamment au-dessus et/ou aux abords d'une centrale photovoltaïque, qui soit simple dans leur conception et dans leur mode opératoire, fiable et précis.

Un autre objectif de la présente invention est un tel système de cartographie tridimensionnelle de la nébulosité qui soit robuste et facile à maintenir, et par conséquent, peu coûteux.

Encore un objectif de la présente invention est un ensemble de prévision de la production d'électricité d'une centrale photovoltaïque permettant de déterminer avec une grande exactitude l'atténuation à venir de l'ensoleillement sur des panneaux photovoltaïque résultant d'un effet d'ombre causé par un ou plusieurs nuages en progression vers cette centrale photovoltaïque.

Un tel système permettrait alors au gestionnaire du réseau d'électricité de disposer d'informations fiables sur la prévision à court terme de la production d'électricité photovoltaïque, et en conséquence d'avoir une gestion facilité des outils de soutien au réseau.

A cet effet, l'invention concerne un procédé de cartographie tridimensionnelle de la nébulosité du ciel.

Selon l'invention, on réalise les étapes suivantes :
- acquérir au moins une image panoramique d'une zone d'observation du ciel d'au moins 4,6 stéradians à partir du sol,
- mesurer les rayonnements thermiques émis de ladite zone d'observation du ciel pour déterminer la couverture nuageuse et les altitudes de la base et du sommet des nuages dans ladite zone,
- comparer et rapprocher au moins les données issues de ladite image panoramique, de la détermination de ladite couverture nuageuse et des altitudes de la base et du sommet des nuages pour obtenir une cartographie tridimensionnelle de la nébulosité dans ladite zone d'observation du ciel.

On entend ici par "cartographie tridimensionnelle de la nébulosité", la connaissance de la distribution spatiale des nuages dans la zone d'observation du ciel pour pouvoir positionner ces nuages par rapport au soleil et au sol (un observateur, un site cible tel qu'une centrale photovoltaïque ou autre).

De préférence, on déterminera également le genre de ces nuages par une reconnaissance de forme de ces nuages à partir de la ou des images panoramiques acquises.

Cette dernière information permettra d'affecter de manière unique à un nuage donné dans la zone d'observation du ciel, une altitude de base et de sommet.

Dans différents modes de réalisation particuliers de ce procédé de cartographie tridimensionnelle de la nébulosité, chacun ayant ses avantages particuliers et susceptibles de nombreuses combinaisons techniques possibles:
- à partir de ladite au moins une image panoramique acquise par le capteur optique, on détermine la forme du ou des nuages détectés dans la zone d'observation du ciel et on détermine le genre de chaque nuage à partir de la forme ainsi déterminée.
   Cette détermination de la forme du ou des nuages détectés dans la zone d'observation du ciel peut être réalisée au moyen d'un algorithme de reconnaissance de forme.
   A titre d'exemple, la détermination du genre est obtenue par comparaison de la forme ainsi déterminée de chaque nuage présent dans ladite zone d'observation avec des données préalablement enregistrées sur une unité de stockage.
- on suit le déplacement et l'évolution en temps réel de chacun des nuages dans ladite zone d'observation par l'acquisition de mesures à intervalles de temps prédéterminés.
   L'intervalle de temps entre les mesures acquises par le capteur optique et/ou le radiomètre infrarouge peut être périodique. Avantageusement, on réalisera les mesures pour chaque instrument du système de cartographie à une fréquence d'une mesure par minute.
   Alternativement, on suit le déplacement et l'évolution en temps réel de chacun des nuages dans ladite zone d'observation en filmant ladite zone d'observation avec une caméra définissant une zone d'observation du ciel d'au moins 4,6 stéradians.
- on acquière au moins deux images panoramiques de ladite zone d'observation sous des angles d'observation différents grâce à deux capteurs optiques définissant chacun une zone d'observation du ciel d'au moins 4,6 stéradians, ces capteurs étant espacés l'un de l'autre, et on détermine l'altitude des nuages présents dans ladite zone d'observation par triangulation à partir des données fournies par lesdites au moins deux images,
- à partir de ladite cartographie tridimensionnelle du ciel ainsi déterminée à un instant t, on calcule la cartographie tridimensionnelle du ciel à un instant (t + Δt) en vue de déterminer la projection au sol des ombres des nuages présents dans ladite zone d'observation du ciel à cet instant (t + Δt).
   A titre d'exemple, on détermine la direction et la force du vent dominant pour calculer la cartographie tridimensionnelle du ciel à un instant (t + Δt). Alternativement, on déduit de la position des nuages à un instant (t - Δt) et à l'instant t, l'évolution des nuages à l'instant (t + Δt).
   Pour déterminer les points du sol recouverts par l'ombre d'au moins un nuage, on connait également la position future du soleil à un instant (t + Δt) ainsi que le relief du sol.

Dans un mode de réalisation du procédé de cartographie tridimensionnelle de la nébulosité du ciel de l'invention, on réalise les étapes suivantes :
- acquérir au moins deux images panoramiques d'une zone d'observation du ciel au moyen d'au moins deux capteurs optiques définissant chacun une zone d'observation du ciel d'au moins 4,6 stéradians, lesdits capteurs étant placés à distance l'un de l'autre en observant la même zone d'observation du ciel,
- déterminer à partir desdites au moins deux images une cartographie tridimensionnelle de la nébulosité dans ladite zone d'observation du ciel.

Cette dernière étape inclut avantageusement la détermination non seulement de la couverture nuageuse, de la forme des nuages par une reconnaissance de forme et donc du genre de chaque nuage par comparaison de la forme de chaque nuage détecté avec des données préalablement enregistrées mais également la détermination de l'altitude de ces nuages par triangulation.

De préférence, la zone d'observation du ciel d'au moins 4,6 stéradians est obtenue grâce à un capteur optique comportant un objectif hypergone ("Fisheye") .

De manière avantageuse, on aura placé au préalable ces capteurs optiques à une distance d comprise entre 1500 m et 2500 m les uns des autres, et encore mieux à une distance d comprise entre 1850 m et 2150 m.

Ces données peuvent alors être comparées avec les classes d'altitude des nuages obtenues grâce au radiomètre infrarouge pour augmenter encore la précision sur les altitudes de base et de sommet des nuages, notamment pour les nuages de hautes altitudes où le radiomètre infrarouge est moins sensible.

De préférence, on complétera les données fournies par lesdites au moins deux images panoramiques par l'acquisition d'au moins une mesure de télémétrie permettant de déterminer la hauteur du plafond des nuages détectés dans ladite zone d'observation du ciel. Ladite au moins une mesure de télémétrie pourra être réalisée par exemple par télémétrie par laser, ou LIDAR (Light Détection and Ranging, also LlDAR).

L'invention concerne également un système pour la mise en oeuvre du procédé de cartographie tridimensionnelle de la nébulosité tel que décrit précédemment.

Selon l'invention, ce système comprend :
- un capteur optique définissant une zone d'observation du ciel à partir du sol
- un radiomètre infrarouge comportant au moins un récepteur pour recevoir les rayonnements thermiques en provenance de ladite zone d'observation, et des premiers moyens de traitement du signal pour mesurer la couverture nuageuse et l'altimétrie des nuages dans ladite zone d'observation du ciel à partir de ces rayonnements thermiques, ledit radiomètre infrarouge émettant des signaux de sortie, et
- des seconds moyens de traitement du signal pour recevoir les signaux émis par ledit capteur optique et ledit radiomètre infrarouge, et reconstruire à partir de ces signaux, une carte tridimensionnelle de la nébulosité dans ladite zone d'observation du ciel.

Ces différents éléments sont avantageusement réunis sur un même châssis. Avantageusement, ce châssis peut être autotracté. Le châssis peut être équipé de roues ou de chenilles.

Les premiers moyens de traitement du signal sont capables de distinguer à partir des mesures du radiomètre infrarouge, l'émission thermique provenant d'un nuage de celle provenant d'une zone de ciel claire.

Cette distinction peut être obtenue, par exemple, à partir du traitement des mesures de température de luminance obtenues par un ou plusieurs pyromètres optiques.

Le rayonnement infrarouge émis par un ciel clair dans une zone géographique donnée aura pu être obtenu au préalable, par exemple par des mesures réalisées lors de périodes de temps au cours desquelles la zone d'observation du ciel est totalement dépourvue de nuage de quelque altitude que ce soit.

Le rayonnement infrarouge reçu au sol est fortement modulé par la présence de nuages à basse et/ou moyenne altitudes et, dans une moindre mesure, par les nuages à hautes altitudes.

Il est donc plus difficile de détecter de manière précise des nuages de haute altitude en raison du faible impact radiatif associé à ce type de nuages. Cette détection est, par exemple, rendue plus difficile lorsqu'un nuage de haute altitude tel qu'un cirrus est en partie « caché » pour le radiomètre infrarouge par des nuages opaques de basse altitude.

Le capteur optique permet ici de compléter efficacement la détection des nuages de haute altitude. L'association et la comparaison des données fournies par les instruments du système de l'invention permettent donc d'atteindre la précision de mesure requise.

Par ailleurs, et lorsque par exemple, ledit au moins un récepteur du radiomètre infrarouge est fixe, ce système est particulièrement fiable mécaniquement et requiert très peu de maintenance. La mise en œuvre du système de la présente invention est par conséquent peu coûteuse.

De préférence, la zone d'observation du ciel d'au moins 4,6 stéradians est obtenue grâce à un capteur optique comportant un objectif hypergone ("Fisheye"). Avantageusement, cet objectif hypergone aura une largeur de champ au moins égale à 150°. A titre purement illustratif, cet objectif pourra être un objectif hypergone circulaire ayant une couverture de 180° dans toutes les directions, donnant ainsi une image délimitée circulairement.

Dans différents modes de réalisation particuliers de ce système de cartographie tridimensionnelle de la nébulosité, chacun ayant ses avantages particuliers et susceptibles de nombreuses combinaisons techniques possibles:
- ledit radiomètre infrarouge comprend des moyens de mise en rotation dudit au moins un récepteur autour d'un axe de rotation (z) qui est dirigé ou sensiblement dirigé en direction de la zone d'observation du ciel,
- ledit radiomètre infrarouge comporte quatre récepteurs, lesdits récepteurs étant disposés orthogonalement les uns aux autres de sorte que chaque récepteur pointe dans une des directions des quatre points cardinaux du repère terrestre.
   A titre d'exemple, ces quatre points cardinaux du repère terrestre sont le Nord, le Sud, l'Est et l'Ouest.
   De préférence, chaque récepteur présente le même angle zénithal. Les données provenant de ces quatre récepteurs sont avantageusement comparées afin d'augmenter la précision dans la détermination de la nébulosité dans la zone d'observation du ciel définie par le capteur optique.

- ledit radiomètre comporte une pluralité de récepteurs agencés sous la forme d'un réseau bidimensionnel,
- ledit au moins un récepteur opère dans le domaine spectral de 8 à 14 µm.
   De préférence, ce récepteur est un pyromètre optique.
- ledit capteur optique est une caméra permettant d'acquérir des images pour suivre le déplacement des nuages et/ou leur développement dans ladite zone d'observation du ciel.

Alternativement, le capteur optique est un appareil photographique numérique, par exemple à matrice CCD, prenant des images à intervalles de temps régulier, par exemple toutes les minutes, afin de suivre le déplacement des nuages et/ou leur développement dans cette zone d'observation du ciel.

Ces acquisitions permettent avantageusement de déterminer si un nuage donné grossi ou disparait.
- le système comporte deux capteurs optiques définissant chacun une zone d'observation du ciel d'au moins 4,6 stéradians, lesdits capteurs étant placés à distance l'un de l'autre en observant la même zone d'observation du ciel, et des moyens de traitement des signaux émis par lesdits capteurs optiques pour déterminer l'altitude des nuages présents dans ladite zone d'observation par triangulation à partir des images fournis par lesdits capteurs optiques.

Ces deux capteurs optiques permettent avantageusement d'obtenir des mesures stéréoscopiques (stéréovision) de la zone d'observation du ciel permettant d'en déduire l'altitude des nuages présents dans la zone d'observation du ciel. Ces données peuvent alors être comparées avec les classes d'altitude des nuages obtenues grâce au radiomètre infrarouge pour augmenter encore la précision sur les altitudes de base et de sommet des nuages, notamment pour les nuages de hautes altitudes où le radiomètre infrarouge est moins sensible.

De préférence, ces capteurs optiques sont identiques pour définir la même zone d'observation du ciel.

A titre purement illustratif, ces capteurs sont espacés l'un de l'autre d'une distance égale à ou de l'ordre de 2000 m.

La présente invention concerne encore un ensemble de prévision de la production électrique fournie par une installation de production d'énergie solaire équipée d'un ou plusieurs panneaux solaires.

Selon l'invention, cet ensemble comprend un système tel que décrit précédemment, et une unité de traitement calculant à partir de ladite cartographie tridimensionnelle de la nébulosité dans ladite zone d'observation du ciel déterminée par lesdits seconds moyens de traitement du signal, la projection des ombres des nuages présents dans ladite zone d'observation du ciel au sol.

Avantageusement, cet ensemble comporte une pluralité de capteurs d'ensoleillement destinés à mesurer l'atténuation de l'intensité lumineuse due à l'ombre d'au moins un nuage recouvrant le sol, ces capteurs envoyant des signaux vers ladite unité de traitement.

Ces mesures permettent d'améliorer la prédiction de l'atténuation de la production électrique photovoltaïque. En effet, ce réseau de capteurs d'ensoleillement permettra d'annoncer l'atténuation générée par tel ou tel nuage, puis en traquant le déplacement des nuages grâce au capteur optique, il sera possible de prévoir l'atténuation sur le site cible de prévision tel qu'une centrale photovoltaïque.

La présente invention rend donc avantageusement possible :
- l'insertion davantage d'énergie photovoltaïque sur un réseau électrique,
- le dimensionnement et le pilotage d'une infrastructure de stockage d'énergie photovoltaïque,
- l'engagement sur une production photovoltaïque garantie,
- de s'engager avec sa production photovoltaïque sur une production qui sera proposée sur le marché comptant de l'énergie,
- le dimensionnement et le contrôle d'un système de pilotage dynamique de la demande (de type « smart-grid »).

L'invention sera décrite plus en détail en référence aux dessins annexés dans lesquels:
- la figure 1 représente schématiquement un système pour la cartographie tridimensionnelle de la nébulosité du ciel selon un mode de réalisation particulier de la présente invention;

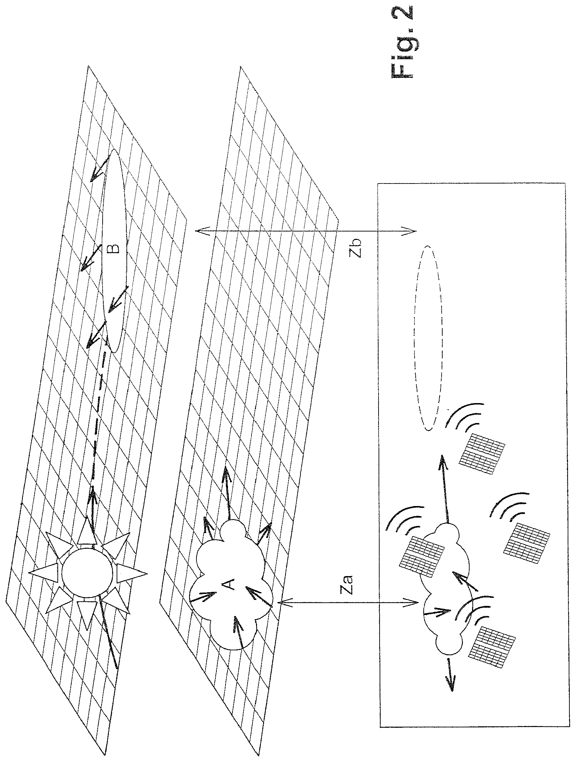

- la figure 2 montre une centrale photovoltaïque et les ombres projetées par les nuages se déplaçant au dessus de cette centrale ;
- la figure 3 montre les différentes étapes conduisant à la détermination des ombres projetées par des nuages se déplaçant au dessus d'une zone géographique;

La production électrique d'une centrale photovoltaïque est fonction du rayonnement reçu par les panneaux et de leur température.

Le rayonnement peut lui-même être décomposé en une composante déterministe (le point de la Terre considéré, la date, l'heure) et une composante liée principalement à la nébulosité.

Ainsi, la nébulosité peut soit jouer un rôle positif en générant un albédo ou négatif en générant de l'ombre.

A un instant donné, l'effet des nuages est lié à leur position par rapport au soleil et l'installation photovoltaïque considérée. L'effet des nuages va également être fonction de leur nature, un cumulus ayant un effet différent d'un cirrus par exemple.

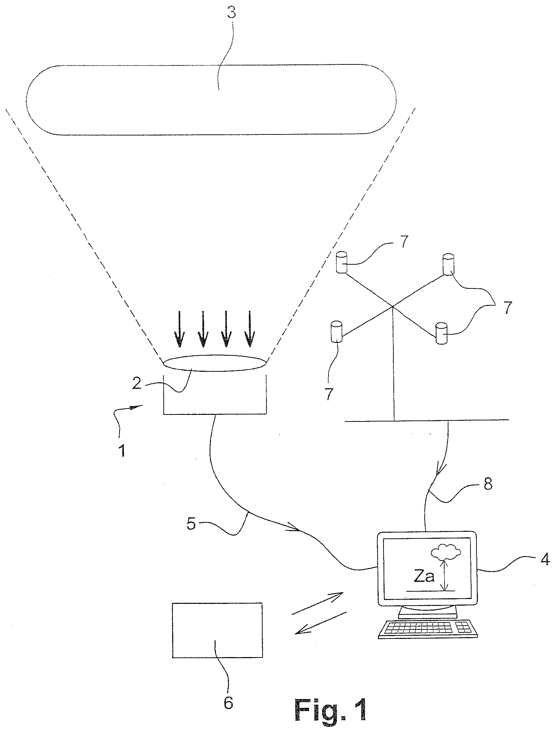

La Figure 1 montre un système pour la cartographie tridimensionnelle de la nébulosité du ciel selon mode de réalisation préféré de l'invention.

Ce système permet avantageusement être mis en œuvre pour déterminer avec une grande précision la nébulosité du ciel au dessus d'une centrale photovoltaïque.

Pour cela, le système comprend un appareil photographique 1 à matrice CCD. Cet appareil est équipé d'un objectif hypergone 2 circulaire définissant une zone d'observation du ciel 3.

Cet appareil photographique 1 permet une acquisition d'image numérique de la zone d'observation du ciel 3 à partir du sol d'au moins 4,6 stéradians à une fréquence d'une image par minute, autorisant ainsi un suivi de l'évolution et du déplacement des nuages détectés dans cette zone d'observation du ciel 3.

Le traitement des images acquises par cet appareil 1 est réalisé par une unité de traitement 4 recevant les signaux émis par cet appareil photographique 1. Ces signaux sont avantageusement envoyés via une liaison filaire 5 telle qu'une liaison série RS-232. Alternativement, ces signaux sont envoyés par des moyens de communication sans fil tels qu'un émetteur bluetooth, ...

L'unité de traitement 4, tel qu'un ordinateur, est capable de traiter les signaux provenant de l'appareil photographique 1 pour repérer la présence d'un ou plusieurs nuages dans la zone d'observation du ciel 3.

Cette unité de traitement 4 autorise également la détection de la forme de ces nuages grâce à un algorithme de reconnaissance de forme. Les formes détectées des nuages sont ensuite comparées par l'unité de traitement 4 à des données préalablement stockées sur une unité de stockage 6 afin de déterminer le genre de ces nuages.

Rappelons en effet que les nuages sont rangés dans des catégories prédéterminées de forme appelées genre de nuage. Il existe ainsi deux genres de nuages convectifs (cumulus et cumulonimbus), i.e. à développement vertical, et huit genres de nuages dont le développement s'opère essentiellement en couches horizontales (cirrus, cirrocumulus, stratus, altostratus, ...).

L'unité de traitement 4 permet alors d'associer à un genre de nuage, une classe d'altitude, cette dernière étant connue pour chaque genre de nuage.

Rappelons que les nuages sont généralement classés en trois classes différentes selon l'altitude de leur base (classe 1 de 0 à 2000 m, classe 2 de 2000 à 6000 m et classe 3 pour une altitude supérieure à 6000 m).

Le système comporte également un radiomètre infrarouge comportant quatre récepteurs 7 pour recevoir les rayonnements thermiques en provenance de la zone d'observation du ciel. Ces récepteurs 7 qui sont des pyromètres opérant dans le domaine spectral de 8 à 14 µm, sont disposés orthogonalement les uns aux autres de sorte que chaque récepteur pointe dans une des directions des quatre points cardinaux du repère terrestre.

Le radiomètre infrarouge permet également d'acquérir des mesures à une fréquence d'une mesure par minute.

Ce radiomètre infrarouge émet des signaux de sortie qui sont traités par l'unité de traitement 4. Ces signaux sont par exemple transmis par une liaison filaire 8 ou par des moyens de communication sans fil.

L'unité de traitement 4 est capable de déterminer à partir de ces signaux, la couverture nuageuse dans la zone d'observation du ciel définie par l'appareil photographique 1 ainsi que les classes d'altitude des nuages. Pour chaque classe d'altitude, on connait la base et le sommet des nuages. Ces données sont enregistrées dans l'unité de stockage 6.

L'unité de traitement 4 permet ensuite à partir de ces données enregistrées, en les ayant rapprochées entre elles, d'associer de manière unique à un nuage repéré par l'appareil photographique 1, une altitude de base et de sommet.

Connaissant ainsi la cartographie tridimensionnelle de la nébulosité, la course du soleil et le relief du sol, il est possible de déterminer les points du sol recouverts par des ombres.

En suivant le déplacement et l'évolution des nuages dans la zone d'observation du ciel, il est alors possible de prévoir l'atténuation associée du rayonnement solaire dans une zone géographique par la connaissance du genre des nuages.

Toutefois, la qualité de la prévision de la production photovoltaïque pourra encore être raffinée en exploitant les données issues d'un réseau de capteurs d'ensoleillement.

Ce réseau de capteurs pourra annoncer l'atténuation générée par tel ou tel nuage, puis, en traquant le déplacement des nuages par imagerie et en y associant la course du Soleil, il sera possible de prévoir l'atténuation sur le site cible de la prévision tel qu'une centrale photovoltaïque.

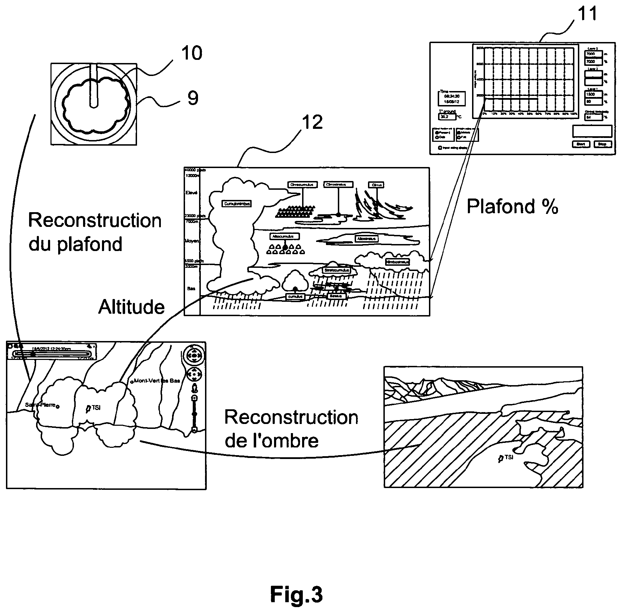

La figure 3 montre les différentes étapes conduisant à la détermination des ombres projetées par des nuages se déplaçant au dessus d'une zone géographique.

Les informations obtenues à partir de l'image panoramique 9 dans le visible comprennent : repérer la présence de nuages 10, détection éventuelle de la forme par un algorithme de reconnaissance de forme, détermination du type (T) des nuages par comparaison avec des formes connues et stockées sur une unité de stockage de données, positionnement des nuages dans un repère (angle azimutal et angle d'élévation) lié au capteur ayant permis l'acquisition de l'image panoramique.

Les informations obtenues à partir de l'image infrarouge 11 obtenue par le radiomètre infrarouge sont : détermination de la couverture nuageuse, des classes d'altitude des nuages et de l'altitude selon l'axe z de chaque classe (C).

A partir d'une table 12 connue, on réalise ensuite une association T - C en vue d'associer de manière unique à un nuage repéré par le capteur ayant permis l'acquisition de l'image panoramique 9, une altitude de base et de sommet le long de l'axe z, ainsi qu'une position de ce nuage dans le repère lié au capteur (angle azimutal et angle d'élévation), permettant ainsi de déterminer les coordonnées (x, y, z) de ce nuage.

## Revendications

1. Procédé de cartographie tridimensionnelle de la nébulosité du ciel, dans lequel on réalise les étapes suivantes :
- acquérir au moins une image panoramique dans le visible à l'aide d'un capteur optique, d'une zone d'observation (3) du ciel d'au moins 4,6 stéradians à partir du sol et repérer la présence d'un ou plusieurs nuages dans ladite zone d'observation,
- mesurer les rayonnements thermiques émis de ladite zone d'observation (3) du ciel pour déterminer la couverture nuageuse et les altitudes de la base et du sommet des nuages dans ladite zone,
- comparer et rapprocher au moins les données issues de ladite image panoramique, de la détermination de ladite couverture nuageuse et des altitudes de la base et du sommet des nuages pour associer de manière unique une altitude de base et une altitude de sommet à l'un ou plusieurs nuages repérés à l'image panoramique, et obtenir une cartographie tridimensionnelle de la nébulosité dans ladite zone d'observation (3) du ciel.

2. Procédé selon la revendication 1, dans lequel, à partir de ladite au moins une image panoramique acquise par ledit capteur optique, on détermine la forme du ou des nuages détectés dans ladite zone d'observation du ciel et on détermine le genre de chaque nuage à partir de la forme ainsi déterminée.

3. Procédé selon la revendication 1 ou 2, dans lequel on acquière au moins deux images panoramiques de ladite zone d'observation (3) sous des angles d'observation différents et on détermine l'altitude des nuages présents dans ladite zone d'observation (3) par triangulation à partir des données fournies par lesdites au moins deux images.

4. Procédé selon l'une quelconque des revendications 1 à 3, dans lequel on suit le déplacement et l'évolution en temps réel de chacun des nuages dans ladite zone d'observation (3) par l'acquisition de mesures à intervalles de temps prédéterminés.

5. Procédé selon l'une quelconque des revendications 1 à 4, dans lequel, à partir de ladite cartographie tridimensionnelle du ciel ainsi déterminée à un instant t, on calcule la cartographie tridimensionnelle du ciel à un instant (t + Δt) en vue de déterminer la projection au sol des ombres des nuages présents dans ladite zone d'observation du ciel à cet instant (t + Δt).

6. Système pour la mise en œuvre du procédé de cartographie tridimensionnelle de la nébulosité du ciel selon l'une quelconque des revendications 1 à 5, comprenant
- un capteur optique (1) définissant une zone d'observation (3) du ciel à partir du sol d'au moins 4,6 stéradians,
- un radiomètre infrarouge (7) comportant au moins un récepteur pour recevoir les rayonnements thermiques en provenance de ladite zone d'observation (3), et des premiers moyens de traitement du signal pour mesurer la couverture nuageuse et l'altimétrie des nuages dans ladite zone d'observation (3) du ciel à partir de ces rayonnements thermiques, ledit radiomètre infrarouge (7) émettant des signaux de sortie, et
- des seconds moyens de traitement du signal pour recevoir les signaux émis par ledit capteur optique (1) et ledit radiomètre infrarouge (7), et reconstruire à partir de ces signaux, une carte tridimensionnelle de la nébulosité dans ladite zone d'observation (3) du ciel.

7. Système selon la revendication 6, dans lequel ledit radiomètre infrarouge (7) comprend des moyens de mise en rotation dudit au moins un récepteur autour d'un axe de rotation (z) qui est dirigé ou sensiblement dirigé en direction de la zone d'observation (3) du ciel.

8. Système selon la revendication 6 ou 7, dans lequel ledit capteur optique comporte un objectif (2) hypergone, et encore mieux un objectif hypergone circulaire.

9. Système selon l'une quelconque des revendications 6 à dans lequel ledit radiomètre infrarouge (7) comporte quatre récepteurs, lesdits récepteurs étant disposés orthogonalement les uns aux autres de sorte que chaque récepteur est apte à pointer dans une des directions des quatre points cardinaux du repère terrestre.

10. Système selon l'une quelconque des revendications 6 à dans lequel ledit radiomètre comporte une pluralité de récepteurs agencés sous la forme d'un réseau bidimensionnel.

11. Système selon l'une quelconque des revendications 6 à 10, comportant capteurs optiques définissant chacun une zone d'observation (3) du ciel d'au moins 4,6 stéradians, lesdits capteurs étant placés à distance l'un de l'autre en observant la même zone d'observation (3) du ciel, et des moyens de traitement des signaux émis par lesdits capteurs optiques pour déterminer l'altitude des nuages présents dans ladite zone d'observation (3) par triangulation à partir des images fournis par lesdits capteurs optiques.

## Patentansprüche

1. Verfahren zur dreidimensionalen Abbildung der Bewölkung des Himmels, bei dem man die folgenden Schritte ausführt:
- Aufnehmen mindestens eines Panoramabildes im sichtbaren Bereich mithilfe eines optischen Sensors einer Beobachtungszone (3) des Himmels von mindestens 4,6 Steradianten vom Boden aus, und Orten der Präsenz einer oder mehrerer Wolken in der Beobachtungszone,
- Messen der in der Beobachtungszone (3) des Himmels ausgesandten Wärmestrahlungen, um die Wolkendecke und die Höhen der Basis und des Scheitelpunkts der Wolken in der Zone zu bestimmen,
- Vergleichen und Annähern von mindestens den aus dem Panoramabild stammenden Daten, aus der Bestimmung der Wolkendecke und der Höhen der Basis und des Scheitelpunkts der Wolken, zum eindeutigen Zuordnen einer Basishöhe und einer Scheitelpunkthöhe zu der einen oder mehreren im Panoramabild georteten Wolken, und Erhalten einer dreidimensionalen Abbildung der Bewölkung in der Beobachtungszone (3) des Himmels.

2. Verfahren nach Anspruch 1, wobei aus dem mindestens einen durch den optischen Sensor aufgenommenen Panoramabild die Form der in der Beobachtungszone detektierten Wolke oder Wolken bestimmt wird, und die Art jeder Wolke aus der so bestimmten Form bestimmt wird.

3. Verfahren nach Anspruch 1 oder 2, wobei mindestens zwei Panoramabilder der Beobachtungszone (3) unter unterschiedlichen Beobachtungswinkeln aufgenommen werden, und die Höhe der in der Beobachtungszone (3) vorhandenen Wolken durch Triangulation aus den durch die mindestens zwei Bilder bereitgestellten Daten bestimmt wird.

4. Verfahren nach einem der Ansprüche 1 bis 3, wobei die Bewegung und Entwicklung jeder der Wolken in der Beobachtungszone (3) durch Erfassen von Messwerten in vorbestimmten Zeitintervallen in Echtzeit verfolgt wird.

5. Verfahren nach einem der Ansprüche 1 bis 4, wobei aus der so zu einem Zeitpunkt t bestimmten dreidimensionalen Abbildung des Himmels eine dreidimensionale Abbildung des Himmels zu einem Zeitpunkt (t + Δt) in Hinblick darauf errechnet wird, die Projektion am Boden der Schatten der in der Beobachtungszone des Himmels vorhandenen Wolken zu diesem Zeitpunkt (t + Δt) zu bestimmen.

6. System zur Umsetzung des Verfahrens zur dreidimensionalen Abbildung der Bewölkung des Himmels nach einem der Ansprüche 1 bis 5, umfassend
- einen optischen Sensor (1), der eine Beobachtungszone (3) des Himmels von mindestens 4,6 Steradianten vom Boden aus definiert,
- ein Infrarot-Strahlenspürgerät (7), das mindestens einen Empfänger zum Empfangen der Wärmestrahlungen aus der Beobachtungszone (3) und erste Mittel zur Verarbeitung des Signals beinhaltet, um die um die Wolkendecke und die Höhenmessung der Wolken in der Beobachtungszone (3) des Himmels aus diesen Wärmestrahlungen zu messen, wobei das Infrarot-Strahlenspürgerät (7) Ausgangssignale ausgibt, und
- zweite Verarbeitungsmittel des Signals zum Empfangen der von dem optischen Sensor (1) und dem Infrarot-Strahlenspürgerät (7) ausgegebenen Signal und Rekonstruieren aus diesen Signalen einer dreidimensionalen Abbildung der Bewölkung in der Beobachtungszone (3) des Himmels.

7. System nach Anspruch 6, wobei das Infrarot-Strahlenspürgerät (7) Mittel zum in-Drehung-Versetzen des mindestens einen Empfängers um eine Drehachse (z) umfasst, die in Richtung der Beobachtungszone (3) des Himmels gerichtet, oder im Wesentlichen dorthin gerichtet ist.

8. System nach Anspruch 6 oder 7, wobei der optische Sensor ein Fischaugen-Objektiv (2), oder noch besser ein kreisförmiges Fischaugen-Objektiv beinhaltet.

9. System nach einem der Ansprüche 6 bis, wobei das Infrarot-Strahlenspürgerät (7) vier Empfänger beinhaltet, wobei die Empfänger orthogonal zueinander angeordnet sind, sodass jeder Empfänger imstande ist, in eine der Richtungen der vier Himmelsrichtungen der terrestrischen Ortung zu zeigen.

10. System nach einem der Ansprüche 6 bis, wobei das Strahlenspürgerät eine Vielzahl von Empfängern beinhaltet, die in Form eines zweidimensionalen Netzes angeordnet sind.

11. System nach einem der Ansprüche 6 bis 10, zwei optische Sensoren beinhaltend, die jeweils eine Beobachtungszone (3) des Himmels von mindestens 4,6 Steradianten definieren, wobei die Sensoren im Abstand voneinander platziert sind, indem dieselbe Beobachtungszone (3) des Himmels beobachtet wird, und Mittel zur Verarbeitung der von den optischen Sensoren ausgegebenen Signalen, um die Höhe der in der Beobachtungszone (3) vorhandenen Wolken durch Triangulation aus den durch die optischen Sensoren bereitgestellten Bildern zu bestimmen.

## Claims

1. Method for the three-dimensional mapping of the cloudiness of the sky, wherein the following steps are carried out:
- acquiring at least one panoramic image in the visible range using an optical sensor, of an observation area (3) of the sky of at least 4.6 steradians from the ground and identifying the presence of one or more clouds in said observation area,
- measuring the thermal radiation emitted from said observation area (3) of the sky in order to determine the cloud cover and the altitudes of the base and the top of the clouds in said area,
- comparing and reconciling at least the data from said panoramic image, from the determination of said cloud cover and from the altitudes of the base and the top of the clouds in order to uniquely associate a base altitude and a top altitude with one or more clouds identified in the panoramic image, and obtain a three-dimensional mapping of the cloudiness in said observation area (3) of the sky.

2. Method according to claim 1, wherein, based on said at least one panoramic image acquired by said optical sensor, the shape of the cloud(s) detected in said observation area of the sky is determined and the type of each cloud is determined based on the shape thus determined.

3. Method according to claim 1 or 2, wherein at least two panoramic images of said observation area (3) at different angles of observation are acquired and the altitude of the clouds present in said observation area (3) is determined by triangulation based on the data provided by said at least two images.

4. Method according to any one of claims 1 to 3, wherein the movement and progression in real time of each of the clouds in said observation area (3) is tracked by acquiring measurements at predetermined time intervals.

5. Method according to any one of claims 1 to 4, wherein, based on said three-dimensional mapping of the sky thus determined at a time t, the three-dimensional mapping of the sky at a time (t + Δt) is computed with a view to determining the projection on the ground of the shadows of the clouds present in said observation area of the sky at this time (t + Δt).

6. System for executing the method for the three-dimensional mapping of the cloudiness of the sky according to any one of claims 1 to 5, comprising
- an optical sensor (1) defining an observation area (3) of the sky from the ground of at least 4.6 steradians,
- an infrared radiometer (7) including at least one receiver for receiving thermal radiation from said observation area (3), and first signal processing means for measuring the cloud cover and the altimetry of the clouds in said observation area (3) of the sky based on this thermal radiation, said infrared radiometer (7) emitting output signals, and
- second signal processing means for receiving the signals emitted by said optical sensor (1) and said infrared radiometer (7), and reconstructing based on these signals, a three-dimensional map of the cloudiness in said observation area (3) of the sky.

7. System according to claim 6, wherein said infrared radiometer (7) comprises means for rotating said at least one receiver about an axis of rotation (z) which is directed or substantially directed towards the observation area (3) of the sky.

8. System according to claim 6 or 7, wherein said optical sensor includes a fisheye lens (2), and preferably a circular fisheye lens.

9. System according to any one of claims 6 to wherein said infrared radiometer (7) includes four receivers, said receivers being disposed orthogonally with respect to one another such that each receiver is capable of pointing in one of the directions of the four cardinal points of the terrestrial reference frame.

10. System according to any one of claims 6 to wherein said radiometer includes a plurality of receivers arranged in the form of a two-dimensional network.

11. System according to any one of claims 6 to 10, including two optical sensors each defining an observation area (3) of the sky of at least 4.6 steradians, said sensors being placed at a distance from one another while observing the same observation area (3) of the sky, and means for processing the signals emitted by said optical sensors to determine the altitude of the clouds present in said observation area (3) by triangulation based on the images provided by said optical sensors.
